# FASCICULE DE BREVET EUROPEEN

(11) **EP 3 489 075 B1**
(45) Date de publication et mention de la délivrance du brevet: **04.08.2021**
(21) Numéro de dépôt: 18207893.1
(22) Date de dépôt: 22.11.2018
(51) Int. Cl.: B60L 53/14, H02J 7/00, B60L 53/36

(54) **SYSTEME DE POSITIONNEMENT D'UN VEHICULE ELECTRIQUE PAR RAPPORT A UNE STATION DE RECHARGE**
SYSTEM ZUM POSITIONIEREN EINES ELEKTROFAHRZEUGS IN BEZUG AUF EINE LADESTATION
POSITIONING SYSTEM FOR AN ELECTRIC VEHICLE RELATIVE TO A CHARGING STATION

(30) Priorité: 22.11.2017 FR 1761068
(43) Date de publication de la demande: 29.05.2019
(73) Titulaire: ALSTOM Transport Technologies, 93400 Saint-Ouen (FR)
(72) Inventeur: HOURTANE, Jean-Luc, 13320 BOUC BEL AIR (FR)
(74) Mandataire: Lavoix

(56) Documents cités:
- EP-A1- 3 213 955
- DE-A1-102014 214 671
- DE-A1-102014 215 350
- JP-B2- 5 635 134
- US-A1- 2016 241 061

## Description

La présente invention concerne les installations de recharge par conduction d'un moyen de stockage d'énergie électrique embarqué à bord d'un véhicule.

Dans ce qui suit, si l'exemple d'un bus est plus particulièrement utilisé, d'autres véhicules sur pneu ou, plus généralement, d'autres véhicules peuvent être considérés, tels que des tramways.

Parmi les différents types d'installation de recharge par conduction, on connaît les installations comportant, côté sol, un plot, implanté dans la chaussée et connecté à une source de puissance électrique (telle qu'une sous-station d'un réseau d'alimentation électrique), et, côté bord, un frotteur monté mobile sous la caisse du véhicule et propre à être descendu pour être mis en contact du plot, alors que le véhicule est arrêté dans une station de recharge et se trouve dans une position de recharge prédéterminée par rapport au plot. Cette position de recharge prédéterminée permet de garantir que le frotteur est en face du plot et qu'il entrera en contact de ce dernier s'il est descendu. Le document EP 3 213 955 A1 divulgue une telle installation.

Pour placer le véhicule dans cette position de recharge, il est actuellement prévu de disposer des repères visuels au sol de manière à permettre au conducteur du véhicule de déterminer où arrêter son véhicule.

Cependant, de tels moyens de positionnement sont insuffisamment précis pour garantir que le frotteur soit à l'aplomb du plot et que, s'il est descendu, les contacts électriques dont est muni le frotteur soient en contact des contacts électriques correspondants portés par le plot, de telle sorte que la recharge puisse avoir lieu.

En particulier, il est redouté qu'un contact du frotteur vienne en appui sur le bord d'un contact du plot, les surfaces en contact électrique étant alors insuffisantes compte tenu de la puissance électrique appliquée lors de la recharge, ce qui conduirait à la soudure du contact du frotteur sur le contact du plot.

Les documents DE 102014214671 et JP 5 635 134 divulguent le positionnement d'un véhicule électrique par rapport à un système de recharge au moyen de l'échange d'un signal radioélectrique.

Le document DE 102014215350 divulgue un dispositif de mesure des différentes composantes d'un champ magnétique généré par un réseau de boucles conductrices.

Le document US 2016/241061 divulgue un système de recharge par induction. L'invention a donc pour but de résoudre ce problème.

Pour cela, l'invention a pour objet un système de positionnement et une installation de recharge selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- La figure 1 est une représentation schématique d'une installation de recharge par conduction intégrant le système de positionnement selon l'invention ;
- La figure 2 est une représentation schématique en vue de dessus du système de positionnement représentant à la fois la partie embarquée et la partie au sol de ce système ; et,
- La figure 3 est une représentation en fonction de la position spatiale d'une surface d'iso-intensité de la composante verticale du champ magnétique généré par la partie au sol du système de localisation.

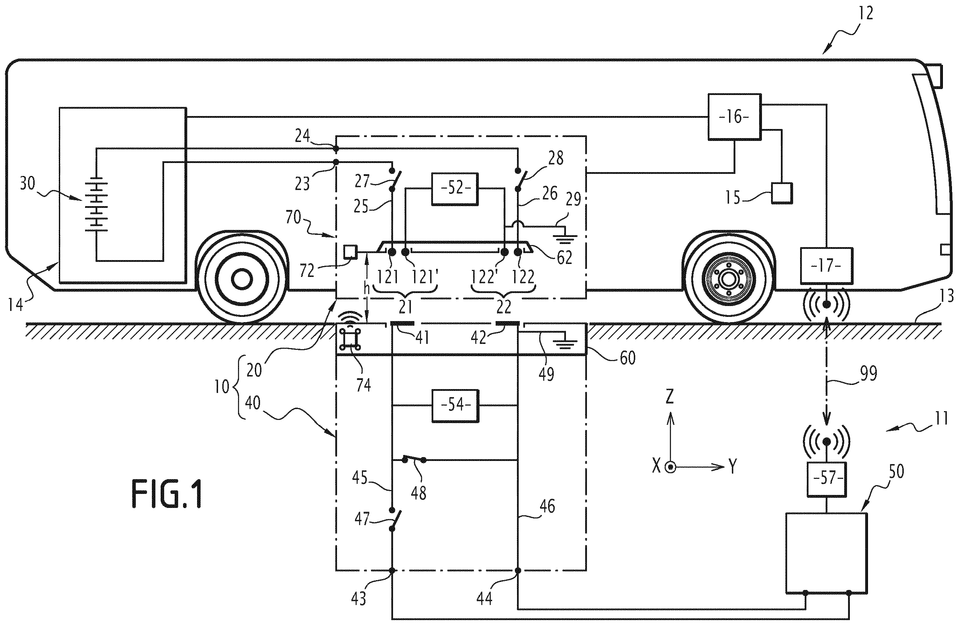

La figure 1 représente une installation 10 de recharge par conduction permettant l'application, en sécurité, d'une puissance électrique délivrée par une source 50 d'une station de recharge 11, à demeure, à un moyen de stockage d'énergie électrique 30 appartenant à un circuit de puissance 14 d'un bus 12.

Le bus 12 comporte un dispositif de contrôle commande 16.

Le bus 12 comporte un module de mesure d'isolement 15, pour s'assurer que le circuit de puissance 14 est isolé galvaniquement du châssis du bus 12 à tout instant, excepté lors de la recharge du moyen 30.

Le bus 12 comporte également un module de radio communication 17 propre à établir une liaison de communication sans fil 99 avec un module de radio communication 57 dont est équipée la source 50, afin d'échanger des données pour ajuster les caractéristiques de la puissance électrique de recharge à appliquer. Il s'agit par exemple d'une liaison sans fil mettant en oeuvre un protocole de communication conforme au protocole connu sous la dénomination Bluetooth®.

L'installation 10 comporte, embarqué à bord du bus 12, un dispositif de recharge embarqué 20. En entrée, le dispositif 20 comporte, dans le mode de réalisation présenté ici en détail, deux contacts, chaque contact étant composé de deux électrodes, respectivement un contact de polarité positive 21, comportant une électrode de puissance 121 et une électrode de mise à la terre 121', et un contact de polarité négative 22, comportant une électrode de puissance 122 et une électrode de mise à la terre 122'.

En sortie, le dispositif de recharge embarqué 20 est connecté, par des première et seconde bornes de sortie 23 et 24, aux bornes du moyen de stockage d'énergie électrique 30. Le moyen 30 est par exemple constitué d'une batterie, mais d'autres solutions techniques sont connues de l'homme du métier.

L'installation 10 comporte un dispositif de recharge au sol 40, faisant partie de la station de recharge 11. En entrée, le dispositif 40 est connecté, par des première et seconde bornes d'entrée 43 et 44, aux bornes de la source 50. La source 50 est par exemple une sous-station d'un réseau d'alimentation électrique.

En sortie, le dispositif de recharge au sol 40 comporte, dans le mode de réalisation présenté ici en détail, deux contacts, respectivement un contact de polarité positive 41 et un contact de polarité négative 42.

Les contacts 41 et 42 du dispositif de recharge au sol 40 sont intégrés dans un plot 60, implanté dans la chaussée 13, de manière à présenter une surface supérieure affleurant avec la surface de la chaussée de circulation du bus 12.

Le dispositif de recharge embarqué 20 comporte un frotteur 62, monté sous la caisse du bus 12 et propre à être déplacé verticalement entre une position haute et une position basse.

Dans la position haute, le frotteur est à une hauteur h au-dessus de la surface de la chaussée 13.

Dans la position basse et alors que le bus 12 est arrêté dans une position de recharge prédéterminée, le contact de polarité positive 21 du dispositif embarqué 20 est en contact électrique avec le contact de polarité positive 41 du dispositif au sol 40 et le contact de polarité négative 22 du dispositif embarqué 20 est en contact électrique avec le contact de polarité négative 42 du dispositif au sol 40.

Le dispositif de recharge embarqué 20 comporte une maille de polarité positive 25, reliant l'électrode de puissance 121 à la borne de sortie 23 (connectée à la polarité positive de la batterie), via un contacteur 27, et une maille de polarité négative 26, reliant l'électrode de puissance 122 à la borne de sortie 24 (connectée à la polarité négative de la batterie), via un contacteur 28.

Le dispositif 20 comporte, entre les électrodes de mise à la terre 121' et 122', un module embarqué de contrôle de la mise à la terre 52.

A proximité de l'électrode 122' du contact de polarité négative 22, l'électrode 122' est connectée électriquement au châssis du bus 12. Ceci est représenté schématiquement sur la figure 1 par la liaison de terre 29.

Le dispositif de recharge au sol 40 comporte une maille de polarité positive 45, qui relie le contact de polarité positive 41 et la première borne d'entrée 43, et une maille de polarité négative 46, qui relie le contact de polarité négative 42 et la seconde borne d'entrée 44. La maille de polarité positive 45 intègre un contacteur commandé 47.

Entre les mailles de polarité positive et de polarité négative, le dispositif 40 comporte un contacteur 48 de sécurité.

A proximité du contact de polarité négative 42, la maille de polarité négative 46 est connectée électriquement à une prise de terre. Ceci est représenté schématiquement sur la figure 1 par la liaison de terre 49.

Le dispositif 40 comporte, connecté entre les mailles de polarité positive et de polarité négative, un module au sol de contrôle de la mise à la terre 54.

L'échange de données entre les modules de contrôle de la mise à la terre 52 et 54 permet de garantir la mise à la terre de la caisse du véhicule à tout instant de la mise en contact des contacts 22 et 42, d'une part, et des contacts 21 et 41, d'autre part, en particulier à tout instant de la recharge, de manière à assurer la sécurité des personnes autour du véhicule.

L'installation 10 est équipée d'un système de positionnement 70 comportant, au sol, un module de génération 74, propre à générer un champ magnétique et, à bord du bus 12, un module de mesure 72, propre à mesurer le champ magnétique généré par le module de génération 74. En variante, le module de génération est embarqué et le module de mesure est au sol.

Le module de mesure 72 est propre à mesurer une grandeur caractéristique du champ magnétique, cette grandeur étant une fonction de la position du module de mesure par rapport à un point de référence du module de génération 74. Dans ce qui suit la grandeur caractéristique considérée est l'intensité du champ magnétique selon la direction verticale Z passant par le point d'implantation du module de génération 74.

De préférence, le module de génération 74 est intégré au plot 60 et le module de mesure 72 est intégré au frotteur 72.

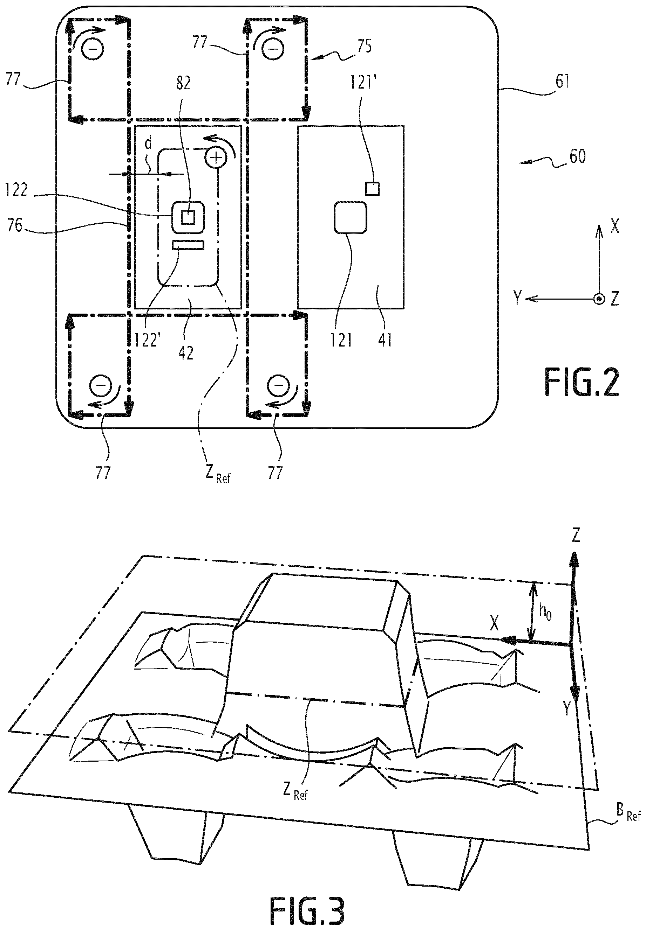

Comme représenté plus en détail sur la figure 2, la surface supérieure du plot 60 présente un cadre 61 autour des contacts de polarité positive 41 et de polarité négative 42.

Les contacts 41 et 42 sont plans et reposent dans un même plan sensiblement horizontal XY au niveau de la surface de la chaussée 13. Ils sont de forme rectangulaire, par exemple de 300 mm de long par 500 mm de large. Ils sont disposés parallèlement et espacés l'un de l'autre selon une direction Y.

Le cadre 61, de forme en « huit », entoure des contacts 41 et 42.

La figure 2 représente également les électrodes de polarité négative 122 et 122' et les électrodes de polarité positive 121 et 121' portées par le frotteur 62. Ces électrodes présentent des dimensions réduites par rapport à celles des contacts 41 et 42 du plot 60.

Les électrodes de puissance 121 et 122 sont de section sensiblement carrée, par exemple de 50 mm de côté.

Dans la position de recharge prédéterminée, les électrodes de puissance 121 et 122 sont à l'aplomb respectivement avec les milieux des contacts 41 et 42. C'est ce qui est représenté sur la figure 2.

Le module de mesure 72 comporte un capteur 82, par exemple à effet Hall, propre à mesurer l'intensité du champ magnétique, par exemple l'intensité Bz selon la direction verticale Z. Il est en particulier capable de déterminer le signe de cette intensité, c'est-à-dire la direction du champ magnétique selon la direction verticale Z. Dans le mode de réalisation de la figure 2, le capteur 82 est placé au centre de l'électrode de puissance 122 du contact de polarité négative 22 du frotteur 62.

Le module de génération 74 comporte une boucle de courant 75, représentée sur la figure 2. La boucle est intégrée au cadre 61 de manière à reposer dans un plan sensiblement horizontale XY, de préférence le plan horizontal de la surface libre des contacts 41 et 42, placé par convention à la cote Z=0. La boucle 75 est de préférence symétrique par rapport à un point de référence.

La boucle de courant 75 comporte une boucle centrale 76 et quatre boucles périphériques 77. La boucle centrale 76 est rectangulaire et entoure le contact de polarité négative 42. Chaque boucle périphérique 77 touche un coin de la boucle centrale 76 par l'un de ses coins. Le point de référence de la boucle 75 correspond alors au milieu de la boucle centrale 76, et coïncide avec le milieu du contact de polarité négative 42.

La boucle 75 est parcourue par des courants d'induction.

Dans la boucle centrale 76 un courant d'induction circule dans un premier sens (noté positivement sur la figure 2), alors que dans les boucles périphériques 77 un courant d'induction circule dans un second sens, opposé au premier (noté négativement sur la figure 2).

Avantageusement, la boucle 75 est réalisée à partir d'un unique fil métallique ou faisceau de fils métalliques torsadé sur lui-même de manière à former à la fois la boucle centrale 76 et les boucles périphériques 77, tout en permettant qu'un même courant d'induction circule dans chaque boucle élémentaire 76, 77 conformément aux sens indiqués ci-dessus.

La figure 3 représente une surface dans le repère X, Y, Z centré sur le point de référence du module de génération, c'est-à-dire le milieu de la boucle 75. Cette surface est une surface iso-intensité reliant les points où l'intensité de la composante selon la direction Z du champ magnétique est constante.

L'intersection d'une surface iso-intensité du champ résiduel avec un plan de mesure situé au-dessus du plan de la boucle définit une zone globalement rectangulaire inscrite, en projection, à l'intérieur de la boucle centrale 76. Le centre de cette zone rectangulaire correspond, en projection selon la direction verticale Z, au milieu de la boucle 75. L'intensité du champ magnétique décroit rapidement en s'éloignant de cette zone suivant la direction X ou Y.

Ainsi, en adaptant l'intensité du courant d'induction traversant la boucle 75, compte tenu de la hauteur h₀ entre le capteur de mesure 82 et le plan XY de la boucle 75 dans la position haute du frotteur 62, il est possible de définir une zone de référence (ZRef sur la figure 2), dont les bords dans le plan XY sont distants des bords du contact de polarité négative 42, d'une distance d qui est supérieure à la dimension de l'électrode de puissance 122 du contact de polarité négative 22 (figure 2). La distance d est par exemple supérieure à 50 mm. Cette zone de référence ZRef est associée à une valeur de référence BRef de l'intensité du champ magnétique selon la direction Z.

Ainsi, a cours de l'approche du bus 12 de la station de recharge 11, le module de mesure 72 compare à chaque instant la valeur mesurée par le capteur 82 avec la valeur de référence, Bref. Lorsque le capteur 82 mesure une intensité du champ magnétique supérieure à la valeur de référence BRef, le module de mesure 72 sait que le capteur 82 est entrée dans la zone ZRef et qu'il se trouve dans une position acceptable par rapport au module de génération 74, c'est-à-dire dans une position d'alignement, à une tolérance près, avec le point de référence du module de génération 74. Le module de mesure 72 émet alors un signal vers le dispositif de contrôle-commande 16 du bus 12 de manière à commander l'arrêt immédiat du bus 12.

Dans le présent mode de réalisation, puisque la boucle d'induction 75 est centrée sur le contact de polarité négative 42 du plot 60 et que le détecteur 82 est centré sur l'électrode de puissance 122 du contact de polarité négative 22 du frotteur 62, la position d'alignement du capteur 82 et du point de référence du module de génération 74 coïncide avec la position de recharge prédéterminée, dans laquelle l'électrode de puissance 122 du contact de polarité négative 22 est à l'aplomb du milieu du contact de polarité négative 42 et l'électrode de puissance 121 du contact de polarité positive 22 est à l'aplomb du milieu du contact de polarité positive 41.

Dans cette position, le frotteur peut être descendu avec la certitude que ses contacts viendront correctement en contact électrique avec les contacts du plot, notamment qu'ils ne viendront pas en contact électrique sur les bords des contacts du plot, évitant ainsi tout risque de soudure.

En variante, les positions du capteur de champ magnétique et de la boucle de courant sont décalées par rapport, respectivement au frotteur et au plot, mais de manière à ce que lorsque le capteur et la boucle de courant sont dans une position relative prédéterminée, les contacts du frotteur et des plots le sont également. Cette configuration permet d'implanter la boucle de courant 75 du module de génération et le capteur 82 du module de mesure à l'écart du plot et du frotteur, pour simplifier les dispositifs au sol et embarqué.

Dans la présente description, le frotteur est présenté comme ayant un mouvement vertical simple. En variante, le frotteur est déplacé pour venir en contact du plot selon un autre parcours. Cependant, ce parcours étant prédéterminé, il permet d'implanter le moyen de mesure et le moyen de génération dans des positons relatives, telles que le véhicule soir arrêté dans la position de recharge adaptée.

Dans une autre variante, indépendante des précédentes, le plot de recharge comporte trois contacts, respectivement de neutre, de phase et de terre, et le frotteur comporte trois contacts, respectivement de neutre, de phase et de terre, chaque contact du frotteur comportant une unique électrode. Le système venant d'être présenté permet d'arrêter le véhicule dans une position de recharge prédéterminée pour que le déplacement du frotteur soit appliqué contre le plot de sorte que chaque paire de contact soit établie correctement.

Le système de positionnement selon l'invention est particulièrement simple à mettre en œuvre. Il est robuste. Il présente un coût de fabrication et de maintenance réduit. D'autres solutions pourraient être proposées comportant par exemple une caméra et un frotteur articulé de manière à permettre au conducteur, une fois son véhicule arrêté de guider la descente du frotteur pour l'amener sur le plot. De telles solutions sont complexes et onéreuses. Elles ne conviennent pas pour équiper rapidement et à moindre coût une flotte de véhicules.

## Revendications

1. Système de positionnement (70) d'un véhicule (12) équipé d'un moyen de stockage d'énergie électrique (30) dans une position de recharge prédéterminée par rapport à un plot (60) au sol d'une station de recharge (11), le plot étant connecté électriquement à une source (50) de puissance électrique, et le véhicule embarquant un frotteur (62) connecté électriquement au moyen de stockage d'énergie électrique et qui, une fois le véhicule dans la position de recharge prédéterminée, est déplacé pour venir en contact électrique avec le plot, comportant
- d'un côté parmi un côté sol et un côté bord, un module de génération (74) d'un champ magnétique, dont une grandeur caractéristique est fonction de la position par rapport à un point de référence du module de génération ;
- de l'autre côté, un module de mesure (72) du champ magnétique propre à mesurer ladite grandeur caractéristique et à la comparer avec une valeur de référence (Bref), de manière à asservir le déplacement du véhicule pour l'arrêter dans une position relative prédéterminée par rapport audit point de référence, la position relative prédéterminée correspondant à la position de recharge prédéterminée,
et **caractérisé en ce que** le module de génération (74) d'un champ magnétique comporte une boucle de courant (75) disposée sensiblement horizontalement et parcourue par un courant d'induction adapté pour générer le champ magnétique, le point de référence étant constitué par le centre géométrique de ladite boucle,
et **en ce que** la boucle de courant (75) est conformée pour présenter une boucle centrale (76) et une pluralité de boucles périphériques (77), le sens de circulation du courant d'induction dans la boucle centrale étant opposé au sens de circulation du courant d'induction dans les boucles périphériques.

2. Système selon la revendication 1, dans lequel, le module de génération (74) d'un champ magnétique est implanté au sol et le module de mesure (72) du champ magnétique est embarqué à bord du véhicule (12).

3. Système selon la revendication 2, dans lequel, le module de génération (74) d'un champ magnétique est intégré au plot (60), et le module de mesure (72) du champ magnétique est porté par le frotteur (62).

4. Système selon la revendication 3, dans lequel le module de mesure (72) du champ magnétique est porté par un contact (22) dont est muni le frotteur (62).

5. Système selon l'une quelconque des revendications précédentes, dans lequel la grandeur caractéristique du champ magnétique est une intensité dudit champ magnétique selon une direction verticale (Bz).

6. Système selon l'une quelconque des revendications 1 à 5, dans lequel la boucle centrale (76) est rectangulaire, de manière à générer une grandeur caractéristique du champ magnétique sensiblement constante dans une zone de référence (ZRef) parallèle au plan (XY) de la boucle centrale et inscrite, en projection selon la direction (Z) perpendiculaire au plan de la boucle, à l'intérieur de la boucle centrale, la grandeur caractéristique chutant rapidement à l'extérieur de ladite zone de référence, suivant le plan (XY) de la boucle centrale.

7. Système selon l'une quelconque des revendications précédentes, dans lequel le module de mesure (72) comporte un capteur (82) à effet Hall propre à mesurer, en tant que grandeur caractéristique du champ magnétique, l'intensité du champ magnétique selon la direction verticale (Z).

8. Installation de recharge (10), **caractérisée en ce qu'**elle comporte un système de positionnement (70) selon l'une quelconque des revendications précédentes.

## Patentansprüche

1. System zur Positionierung (70) eines Fahrzeugs (12), welches mit einem Mittel zur Speicherung elektrischer Energie (30) versehen ist, in einer vorbestimmten Ladeposition bezüglich einer bodenseitigen Kontakteinrichtung (60) einer Ladestation (11), wobei die Kontakteinrichtung mit einer Quelle (50) elektrischer Leistung elektrisch verbunden ist, wobei das Fahrzeug eine Kontaktschuheinrichtung (62) an Bord aufweist, welche mit dem Mittel zur Speicherung elektrischer Energie (30) elektrisch verbunden ist und welche, sobald das Fahrzeug sich in der vorbestimmten Ladeposition befindet, bewegt wird, um in elektrischen Kontakt mit der Kontakteinrichtung zu kommen, wobei es aufweist
- auf einer Seite, welche aus einer Boden-Seite und einer Fahrzeug-Seite ausgewählt ist, ein Modul zur Erzeugung (74) eines Magnetfelds, dessen charakteristische Größe von der Position bezüglich eines Bezugspunkts des Moduls zur Erzeugung (74) abhängig ist,
- auf der anderen Seite, ein Modul zur Messung (72) des Magnetfelds, welches dazu eingerichtet ist, die charakteristische Größe zu messen und diese mit einem Referenzwert (Bref) zu vergleichen, um die Bewegung des Fahrzeugs so zu steuern, dass es in einer vorbestimmten Relativposition bezüglich des Bezugspunkts anhält, wobei die vorbestimmte Relativposition der vorbestimmten Ladeposition entspricht,
und **dadurch gekennzeichnet ist, dass** das Modul zur Erzeugung (74) eines Magnetfelds eine Stromschleife (75) aufweist, welche im Wesentlichen horizontal angeordnet ist und durch einen Induktionsstrom, welcher dazu eingerichtet ist, das Magnetfeld zu erzeugen, durchflossen wird, wobei der Bezugspunkt durch das geometrische Zentrum der Schleife gebildet wird,
und dadurch, dass die Stromschleife (75) so ausgestaltet ist, dass sie eine zentrale Schleife (76) und eine Mehrzahl von peripheren Schleifen (77) aufweist, wobei die Fließrichtung des Induktionsstroms in der zentralen Schleife zu der Fließrichtung des Induktionsstroms in den peripheren Schleifen entgegengesetzt ist.

2. System gemäß dem Anspruch 1, wobei das Modul zur Erzeugung (74) eines Magnetfelds in den Boden eingebaut ist und das Modul zur Messung (72) des Magnetfelds sich an Bord des Fahrzeugs befindet.

3. System gemäß dem Anspruch 2, wobei das Modul zur Erzeugung (74) eines Magnetfelds in die Kontakteinrichtung (60) integriert ist und das Modul zur Messung (72) des Magnetfelds durch die Kontaktschuheinrichtung (62) getragen wird.

4. System gemäß dem Anspruch 3, wobei das Modul zur Messung (72) des Magnetfelds durch einen Kontakt (22), mit welchem der Kontaktschuheinrichtung (62) versehen ist, getragen wird.

5. System gemäß einem der vorhergehenden Ansprüche, wobei die charakteristische Größe des Magnetfelds eine Stärke des Magnetfelds entlang einer Vertikalrichtung (Bz) ist.

6. System gemäß einem der Ansprüche 1 bis 5, wobei die zentrale Schleife (76) rechteckig derart ist, dass eine charakteristische Größe des Magnetfelds erzeugt wird, welche in einem Bezugsbereich (ZRef) parallel zur Ebene (XY) der zentralen Schleife im Wesentlichen konstant ist und, entlang der zur Ebene der Schleife senkrechten Richtung (Z) vorstehend, im Inneren der zentralen Schleife aufgenommen ist, wobei die charakteristische Größe hin zur Außenseite des Bezugsbereichs entlang der Ebene (XY) der zentralen Schleife rapide abfällt.

7. System gemäß einem der vorhergehenden Ansprüche, wobei das Modul zur Messung (72) einen Hall-Effekt-Sensor (82) aufweist, welcher dazu geeignet ist, die Stärke des Magnetfelds entlang der Vertikalrichtung (Z) als die charakteristische Größe des Magnetfelds zu messen.

8. Ladeeinrichtung (10), welche **dadurch gekennzeichnet ist, dass** sie ein System zur Positionierung (70) gemäß einem der vorhergehenden Ansprüche aufweist.

## Claims

1. Positioning system (70) of a vehicle (12) equipped with an electrical energy storage means (30) in a predetermined recharging position with respect to a pad (60) on the ground of a recharging station (11), wherein the pad is electrically connected to a source (50) of electrical power, and the vehicle carrying a shoe gear (62) connected electrically to the electrical energy storage means and which, once the vehicle is in the predetermined recharging position, is moved to come into electrical contact with the pad, comprising :
- on one side among a ground side and an onboard side, a generation module (74) of a magnetic field, a characteristic quantity of which is a function of the position with respect to a reference point of the generation module;
- on the other side, a measuring module (72) of the magnetic field, designed to measure the characteristic quantity and compare it with a reference value (B_{Ref}), in order to control the movement of the vehicle and stop it at a predetermined relative position with respect to the reference point, wherein the predetermined relative position corresponds to the predetermined recharging position,
**characterized in that** the generation module (74) of a magnetic field comprises a current loop (75) that is arranged substantially horizontally, and is traversed by an induction current that is designed to generate the magnetic field, wherein the reference point is the geometric center of the loop, and **in that** the generation module (74) of a magnetic field comprises a current loop (75) comprises a central loop (76) and a plurality of peripheral loops (77), and wherein the flow direction of the induction current in the central loop is opposed to the flow direction of the induction current in the peripheral loops.

2. System according to claim 1, wherein the generation module (74) of a magnetic field is located on the ground, while the measuring module (72) of the magnetic field is onboard the vehicle (12).

3. System according to claim 2, wherein the generation module (74) of a magnetic field is integrated in the pad (60), while the measuring module (72) of the magnetic field is carried by the shoe gear (62).

4. System according to claim 3, wherein the measuring module (72) of the magnetic field is carried by a contact (22) on the shoe gear (62).

5. System according to any one of the preceding claims, wherein the characteristic quantity of the magnetic field is an intensity of the magnetic field in a vertical direction (Bz).

6. System according to any one of the claims 1 to 5, wherein the central loop (76) is rectangular, in order to generate a substantially constant characteristic quantity of the magnetic field in a reference zone (Z_{Ref}), which is parallel to the plane (XY) of the central loop and inscribed inside the central loop in projection in the direction (Z) perpendicular to the plane of the loop, wherein the characteristic quantity decreases rapidly outside the reference zone, along the plane (XY) of the central loop.

7. System according to any one of the preceding claims, wherein the measuring module (72) comprises a Hall effect sensor (82) to measure the intensity of the magnetic field in the vertical direction (Z) as the characteristic quantity of the magnetic field.

8. Recharging installation (10), **characterized in that** it comprises a positioning system (70) according to any one of the preceding claims.
